# FASCICULE DE BREVET EUROPEEN

(11) **EP 2 084 035 B1**
(45) Date de publication et mention de la délivrance du brevet: **14.12.2011**
(21) Numéro de dépôt: 07866494.3
(22) Date de dépôt: 25.10.2007
(51) Int. Cl.: B60R 5/04, B60J 5/10, B62D 33/03

(54) **ENSEMBLE D'UN OUVRANT ARRIERE ET D'UN PLANCHER DE COFFRE DE VEHICULE**
HECKTÜR- UND KOFFERRAUMBODENANORDNUNG FÜR EIN FAHRZEUG
REAR OPENING AND TRUNK FLOOR ASSEMBLY FOR A VEHICLE

(30) Priorité: 27.10.2006 FR 0654613
(43) Date de publication de la demande: 05.08.2009
(73) Titulaire: Compagnie Plastic Omnium, 69007 Lyon (FR)
(72) Inventeur: ANDRE, Gérald, 01500 Amberieu en Bugey (FR); DELWAL, Fabien, 01320 Chalamont (FR); BARRAL, Denis, 38390 Montalieu Vercieu (FR); FILLON, Jérôme, 43000 Le Puy (FR); AMORIN, Guilherme, 01150 Chazey sur Ain (FR); DELAVALLE, Dominique, 01160 Pont d'Ain (FR); CHERON, Hugues, 01800 Meximieux (FR)
(74) Mandataire: Remy, Vincent Noel Paul
(86) Numéro de dépôt international: PCT/FR2007/052250
(87) Numéro de publication internationale: WO 2008/053111

(56) Documents cités:
- US-A- 5 692 792
- US-A1- 2003 127 874
- US-A1- 2005 285 422
- US-B1- 6 312 034
- US-B2- 6 890 013

## Description

La présente invention concerne un ensemble d'un ouvrant arrière et d'un plancher de coffre de véhicule automobile.

Pour faciliter l'accès au coffre d'un véhicule automobile, il est connu de le munir d'un ouvrant arrière inférieur monté pivotant autour d'un axe horizontal situé à proximité de son bord inférieur, entre une position fermée dans laquelle il obture au moins partiellement l'accès au plancher et une position ouverte dans laquelle il libère l'accès au plancher de coffre. Un tel ouvrant arrière est parfois appelé ridelle.

Lorsque la ridelle est en position ouverte, elle est sensiblement horizontale et prolonge le plancher de coffre à l'arrière vers l'extérieur du véhicule. Ainsi, la ridelle se trouve en porte-à-faux par rapport au véhicule automobile. La ridelle peut alors être utilisée comme support pour faciliter le chargement d'objets volumineux et lourds dans le coffre ou pour permettre à une personne de s'asseoir. Généralement, la ridelle et ses fixations au véhicule sont dimensionnées pour pouvoir supporter une masse de l'ordre de 100kg à 200kg (kilogrammes). Pour cela, on dote la ridelle d'une structure et de charnières robustes et de câbles latéraux de type haubans, permettant de retenir la ridelle en position ouverte. La publication DE-A-196 19126 divulge un ensemble d'après le préambule de la revendication 1.

Du fait de ces différents éléments, la ridelle possède une structure complexe, lourde, et coûteuse à fabriquer.

L'invention propose une nouvelle conception de l'arrière d'un véhicule automobile permettant un accès facile au coffre et ne nécessitant pas une ridelle de conception et de fabrication coûteuses.

A cet effet, l'invention a pour objet un ensemble d'après la revendication 1.

On entend par structurel le fait que le plancher est dimensionné de manière à ce qu'il puisse résister, à lui seul, aux sollicitations normales qu'il subit lors d'une utilisation normale dans l'une quelconque de ses positions. Le plancher doit être capable de résister aux efforts engendrés par les charges qu'il soutient, notamment par un bagage lourd, un meuble, un gros appareil électroménager ou par une personne. En particulier, lorsque le plancher est dans sa seconde position dans laquelle il saille au moins partiellement hors du coffre, le plancher doit résister aux efforts normaux de chargement, bien qu'il soit en porte-à-faux.

Grâce à l'invention, c'est le plancher, et non plus l'ouvrant arrière, qui est sollicité lors du chargement du coffre. Etant donné que l'ouvrant arrière n'est plus destiné à supporter les efforts engendrés par le chargement d'objets lourds, il est possible de le dimensionner plus faiblement, uniquement de sorte à ce qu'il résiste à son utilisation normale, c'est-à-dire à son propre poids. Ainsi, on peut se dispenser de l'utilisation de haubans ce qui améliore l'accès au coffre et facilite l'assise d'une personne sur la ridelle. On peut également réduire le nombre de charnières utilisées pour la fixation de la ridelle au véhicule. Enfin, l'ouvrant peut être moins robuste que dans l'état de la technique, c'est-à-dire moins lourd, moins complexe à fabriquer et donc moins coûteux.

Un ensemble d'un ouvrant arrière et d'un plancher de coffre de véhicule selon l'invention peut en outre comprendre une ou plusieurs des caractéristiques suivantes.
- Le plancher et l'ouvrant arrière sont liés l'un à l'autre de sorte que lorsque l'ouvrant est dans sa position ouverte, le plancher intersecte au moins 50% de la projection orthogonale de l'ouvrant sur le plan défini par le plancher, de préférence plus de 80%. Ainsi, l'ouvrant n'est que peu exposé lors du chargement du plancher.
- Le plancher et l'ouvrant arrière sont liés l'un à l'autre de sorte que, lorsque l'ouvrant est dans sa position fermée, le plancher est nécessairement dans sa première position.
- Le plancher et l'ouvrant arrière sont liés l'un à l'autre de sorte que leurs mouvements sont simultanés. Cela permet de simplifier la cinématique d'ouverture de l'ouvrant arrière et du plancher. Cela permet également d'éviter d'ouvrir l'ouvrant sans sortir le plancher, ce qui présenterait le risque d'exposer l'ouvrant à de lourdes charges auxquelles il n'est pas conçu pour résister. En effet, en liant le plancher et l'ouvrant, on est assuré que lorsque l'ouvrant est dans sa position ouverte, le plancher est dans sa seconde position dans laquelle il saille au moins partiellement hors du coffre, et lorsque l'ouvrant est dans sa position fermée, le plancher est dans sa première position dans laquelle il est logé dans le coffre.
- La liaison entre le plancher et l'ouvrant comprend une liaison pivot d'axe sensiblement parallèle à l'axe de l'ouvrant et une liaison glissière de direction orthogonale à cet axe et contenue sensiblement dans le plan de l'ouvrant. Cela permet que, bien qu'étant liés, le plancher et l'ouvrant aient respectivement un mouvement de translation et de rotation.
- L'ensemble comprend en outre un actionneur des moyens de liaison du plancher au véhicule automobile apte à déplacer le plancher entre ses première et seconde positions.
- L'ouvrant arrière comprend des moyens d'absorption d'un choc avec un autre véhicule automobile, par exemple une poutre de chocs.
- L'ouvrant arrière comprend, au niveau de son bord inférieur, une unique charnière centrale agencée pour permettre le pivotement de l'ouvrant entre ses deux positions. Grâce à l'invention, il est possible de dimensionner faiblement l'ouvrant arrière et par conséquent de n'assurer son pivotement qu'au moyen d'une seule charnière centrale. Cette position est par ailleurs avantageuse puisque les absorbeurs de chocs arrière des véhicules automobiles ont généralement des dimensions plus importantes au centre du véhicule où se produisent le plus souvent les chocs. Ainsi, en cas de choc, la charnière est protégée par l'absorbeur et son remplacement est moins fréquent. Enfin, du fait du galbe de l'ouvrant, il est important de reculer le plus possible son point de pivotement pour faciliter son mouvement. Une solution complexe connue consiste à utiliser deux charnières latérales de type « col de cygne » pour écarter l'ouvrant du reste du véhicule lors de l'ouverture. L'utilisation d'une unique charnière centrale permet un point de pivotement reculé, sans avoir recours à des charnières « col de cygne ».
- L'ensemble comprend des moyens de verrouillage de plancher dans sa première position. Ces moyens de verrouillage du plancher forment, de manière indirecte, des moyens de verrouillage de l'ouvrant arrière dans sa position fermée du fait des moyens de liaison de l'ouvrant au plancher. Ainsi, on peut se dispenser de l'utilisation de serrures (centrales ou latérales) portées par la ridelle, ce qui procure plusieurs avantages. Tout d'abord, cela permet de réduire le coût de fabrication de la ridelle. Ensuite, l'absence d'une serrure centrale permet de s'affranchir de la gêne occasionnée par cette serrure pour charger le véhicule. Enfin, cela permet une meilleure gestion des chocs avec un autre véhicule car il n'existe plus de serrure latérale qui, dans l'état de la technique, a tendance à déformer ponctuellement la caisse en blanc du véhicule en cas de choc.

L'invention a également pour objet un véhicule automobile comprenant un ensemble d'un ouvrant arrière et d'un plancher de coffre tel que précédemment défini.

Un véhicule selon l'invention peut en outre comprendre l'une ou plusieurs des caractéristiques suivantes :
- Le véhicule comprend des moyens de liaison portés par des longerons de véhicule, complémentaires des moyens de liaison du plancher au véhicule portés par le plancher.
- Les moyens de liaison du plancher au véhicule sont intercalés verticalement entre les longerons et le plancher.
- Les moyens de liaison du plancher au véhicule automobile sont positionnés latéralement aux longerons. Les moyens de liaison ne sont donc pas intercalés entre le plancher et les longerons de sorte que le plancher peut être positionné très près des longerons. Ainsi, le plancher est plus bas que dans l'état de la technique, ce qui permet d'une part de faciliter le chargement du coffre, et d'autre part d'augmenter le volume intérieur du coffre.
- Le véhicule comprend un hayon supérieur et un second plancher de coffre, supérieur au plancher de l'ensemble, le second plancher étant positionné verticalement au niveau de la jonction entre l'ouvrant arrière et le hayon supérieur.

L'invention sera mieux comprise à la lecture de la description qui va suivre faite uniquement en se référant aux figures annexées dans lesquelles :
- la figure 1 est un schéma selon une coupe verticale longitudinale d'un ensemble d'un ouvrant et d'un plancher selon l'invention, dans trois positions différentes,
- la figure 2 est un schéma selon une coupe verticale transversale des moyens de liaison du plancher au véhicule automobile selon une première variante,
- la figure 3 est une seconde variante des moyens de liaison représentés sur la figure 2,
- la figure 4 est une vue selon une coupe verticale longitudinale des moyens de pivotement de l'ouvrant arrière,
- la figure 5 est une vue en perspective d'un véhicule automobile muni d'un ouvrant arrière selon l'invention en position fermée,
- la figure 6 est une vue similaire à la figure 5 dans laquelle l'ouvrant arrière est dans sa position ouverte.

Le tableau suivant liste les références utilisées sur les figures.

| Elément décrit | N° de référence |
|---|---|
| Véhicule automobile | 10 |
| Hayon | 12 |
| Ouvrant inférieur, ridelle | 14 |
| Coffre | 16 |
| Axe de pivotement de la ridelle | 18 |
| Plancher | 20 |
| Longerons | 22 |
| Moyens de liaison du plancher au véhicule | 24a, 24b |
| Moyens de liaison du plancher à l'ouvrant | 26 |
| Pivot | 28 |
| Glissière | 30 |
| Plancher supérieur | 32 |
| Plancher inférieur de coffre | 34 |
| Moyens d'absorption de chocs | 36 |

Dans l'exemple représenté, la ridelle 14 est de conception simple est légère. Elle comprend par exemple une structure en matière plastique et une peau extérieure d'aspect en matière thermoplastique. Sa structure est simplement dimensionnée pour que la ridelle résiste à son propre poids et à celui des éléments qu'elle supporte comme par exemple les moyens d'absorption de chocs 36.

En revanche, le plancher 20 est structurel de sorte qu'il est apte à résister à des efforts de chargement, notamment lorsqu'il saille du coffre. Un tel plancher structurel peut être réalisé par moulage de matière plastique (thermodurcissable ou thermoplastique), ce qui présente l'avantage d'être de conception légere et robuste.

Les moyens 24a, 24b de liaison du plancher au véhicule automobile sont agencés pour permettre une translation sensiblement horizontale du plancher 20. A cet effet, les moyens de liaison comprennent une glissière 24b portée par les longerons 22 et une partie 24a, complémentaire de la glissière 24b, portée par le plancher 20. Cette partie 24a comprend par exemple des roulements à billes pour améliorer le glissement entre le plancher et les longerons 22.

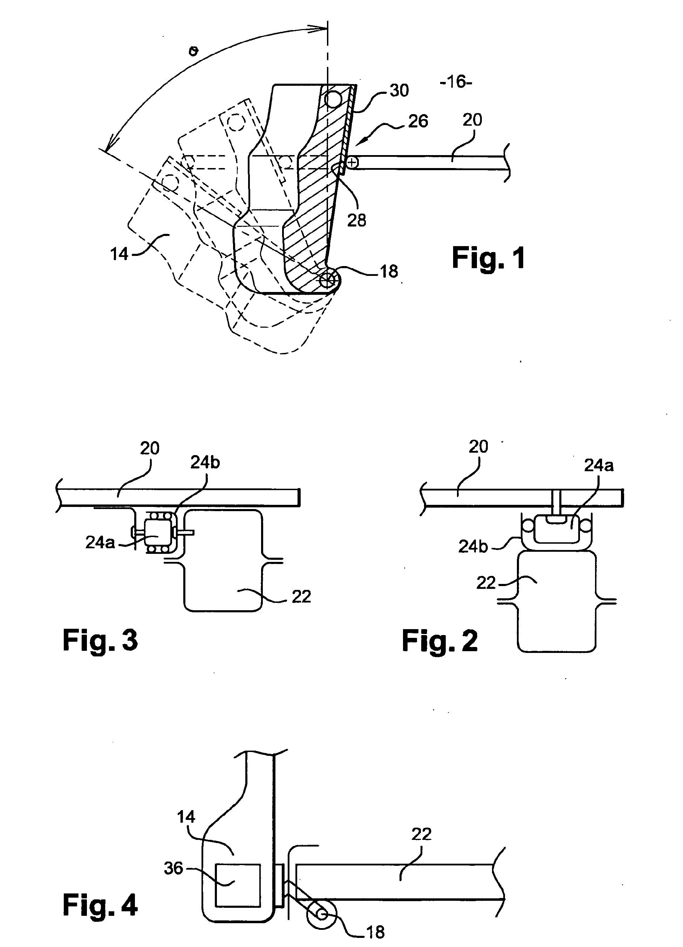

Selon une première variante représentée sur la figure 2, les moyens de liaison du plancher aux longerons sont intercalés verticalement entre le plancher 20 et les longerons 22. Selon une seconde variante représentée sur la figure 3, les moyens de liaison 24a, 24b sont disposés latéralement aux longerons 22 de sorte que le plancher 20 n'est pas espacé des longerons par les moyens de liaison. Ainsi, dans la seconde variante, le plancher est plus bas que dans la première variante.

Comme représenté sur la figure 4, la ridelle 14 comprend des moyens 36 d'absorption de chocs positionnés, lorsque la ridelle est en position fermée, en regard des longerons 22. Alors que dans l'état de la technique, les moyens 18 de pivotement de la ridelle 14 sont nécessairement situés au-dessus des moyens 36 d'absorption de chocs, grâce à l'invention il est possible de positionner ces moyens 18 sous les longerons 22. Cela est avantageux car le mouvement de la ridelle 14 n'est plus gêné par les moyens 36 d'absorption de chocs, ce qui évite le recours au soyage de la carrosserie. On rappelle que le soyage de la carrosserie correspond à un renfoncement de la partie inférieure de la carrosserie de la ridelle permettant le passage de la ridelle au-dessus des moyens d'absorption de chocs lorsque celle-ci est en position ouverte. Le soyage représente pour les concepteurs de véhicule un contrainte de style qui nuit à l'esthétique du véhicule lorsque la la ridelle est en position fermée. Ainsi, grâce à l'invention, il est possible de concevoir une ridelle de forme souhaitée, sans qu'il existe des contraintes de style.

On a représenté sur la figure 1 l'ensemble de la ridelle et du plancher selon l'invention dans trois positions différentes. Dans une première position de fermeture, la ridelle 14 est en position sensiblement verticale et le plancher est logé dans le coffre. Dans une seconde position intermédiaire, la ridelle est à moitié ouverte et le plancher à moitié sorti. Enfin, on a représenté une troisième position dans laquelle la ridelle est totalement ouverte et fait un angle θ par rapport à la verticale sensiblement de 60° et le plancher saille hors du coffre du véhicule automobile. Dans cette troisième position, le plancher recouvre totalement la ridelle si bien qu'elle n'est pas exposée lors du chargement du plancher.

Comme cela est visible sur cette figure, la ridelle pivote autour de son axe 18 et le plancher 20 se déplace en translation horizontale.

Les moyens de liaison entre la ridelle 14 et le plancher 20 comprennent un pivot d'axe 28 et une glissière 30 de direction comprise dans le plan de la ridelle. Lorsque la ridelle est dans sa première position, le pivot 28 est à l'extrémité inférieure de la glissière 30, et lorsque la ridelle est dans sa troisième position ouverte, le pivot 28 est à l'extrémité supérieure de la glissière 30.

Le plancher 20 peut être déplacé au moyen d'un actionneur (non représenté). Le déplacement du plancher 20 provoque un déplacement simultané de la ridelle 14, du fait des moyens de liaison 26.

L'actionneur permet de contrôler avec précision l'ouverture de l'ouvrant et du plancher. En particulier, l'actionneur peut constituer des moyens de verrouillage du plancher dans sa première position.

En jouant sur la force de l'actionneur, on peut également ajuster la pression de fermeture de l'ouvrant. Cela est utile notamment lorsqu'on utilise un joint d'étanchéité entre l'ouvrant et la carrosserie du véhicule et que l'on souhaite contrôler la pression exercée sur ce joint.

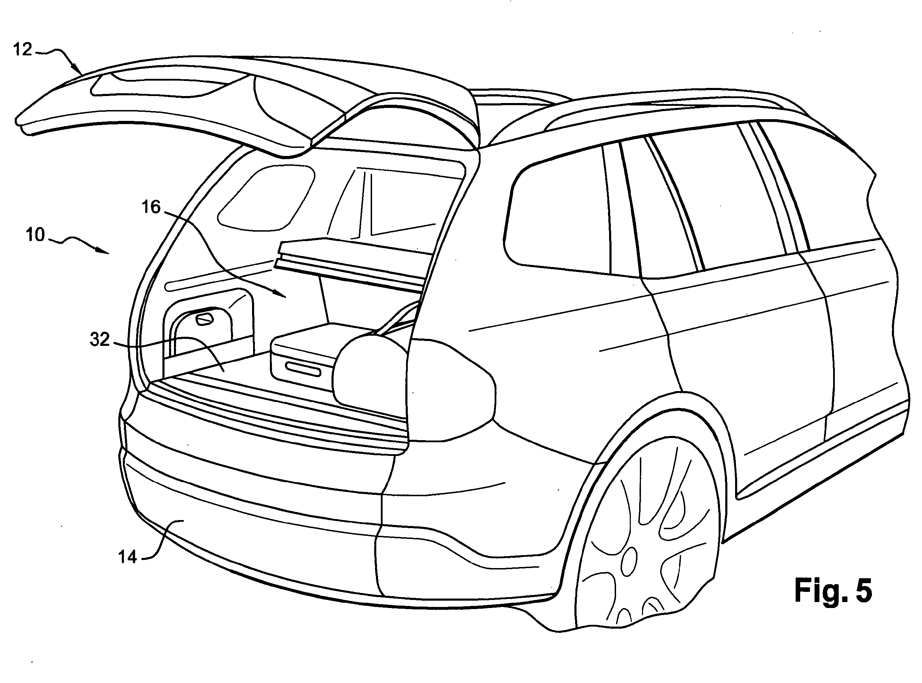

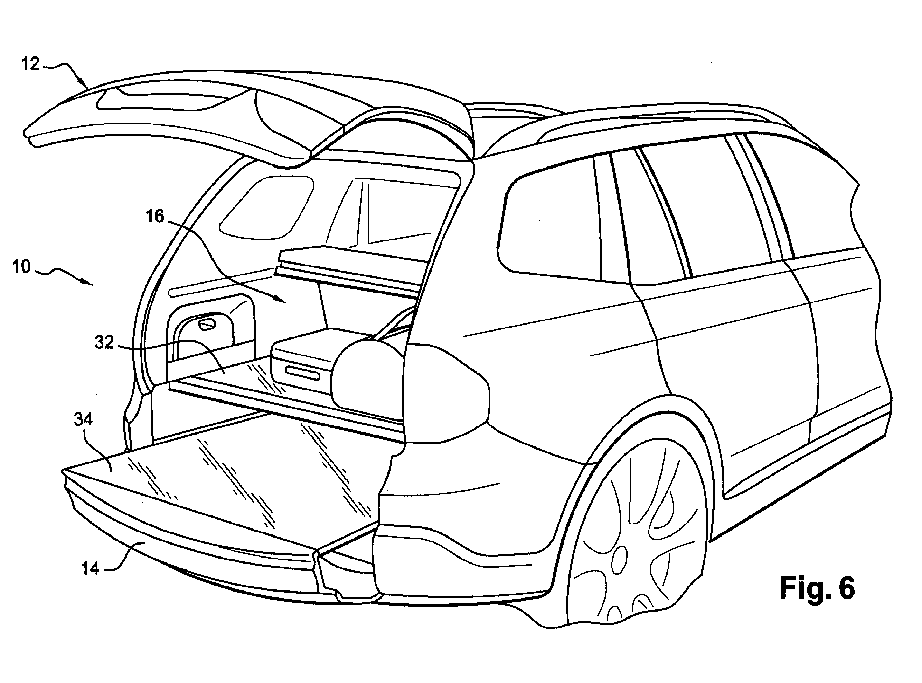

On a représenté sur les figures 5 et 6 un exemple d'utilisation d'un ensemble selon l'invention.

Le véhicule comprend un plancher supérieur 32 accessible lors de l'ouverture du hayon 12. Le véhicule 10 comprend également un plancher inférieur coulissant 34 accessible en ouvrant la ridelle 14. On dispose donc de deux espaces distincts de stockage sans pour autant nuire à l'esthétique du véhicule. En effet, le plancher supérieur 32 est positioné à la jonction entre le hayon 12 et la ridelle 14 si bien que le plancher inférieur 34 est invisible lorsque le hayon 12 est ouvert et que la ridelle 14 est fermée, comme cela est visible sur la figure 5.

Grâce à l'utilisation du plancher coulissant de l'invention, le fond du plancher inférieur 34 est facilement accessible lorsque la ridelle est ouverte, et ce, quelle que soit la distance entre les deux planchers 32 et 34.

Il est également possible de rendre amovible le plancher supérieur 32 si l'on souhaite un volume de stockage maximal.

## Revendications

1. Ensemble d'un ouvrant arrière (14) et d'un plancher (20 ; 34) de coffre (16) de véhicule automobile (10), dans lequel l'ouvrant arrière (14) est destiné à être monté pivotant autour d'un axe (18) horizontal situé à proximité de son bord inférieur, entre une position fermée dans laquelle il obture au moins partiellement l'accès au plancher (20 ; 34) et une position ouverte dans laquelle il libère l'accès au plancher, le plancher (20 ; 34) est structurel de sorte qu'il est apte à résister à des efforts de chargement et comprend des moyens de liaison (24a) au véhicule automobile agencés et conformés pour permettre une mobilité du plancher (20 ; 34) selon une translation de direction horizontale entre une première position dans laquelle il est logé dans le coffre (16) et une seconde position dans laquelle il saille au moins partiellement hors du coffre, dans lequel le plancher (20; 34) et l'ouvrant arrière (14) sont liés l'un à l'autre avec liaison glissière (30) **caractérisé en ce que** la liaison comprend en plus une liaison pivot (28) de sorte que lorsque l'ouvrant est dans sa position ouverte, le plancher est nécessairement dans sa seconde position.

2. Ensemble selon la revendication 1, dans lequel la liaison pivot (28) est d'axe sensiblement parallèle à l'axe de l'ouvrant et la liaison glissière (30) est de direction orthogonale à cet axe et contenue sensiblement dans le plan de l'ouvrant.

3. Ensemble selon la revendication 1 ou 2, dans lequel, lorsque l'ouvrant est en position ouverte, le plancher intersecte au moins 50% de la projection orthogonale de l'ouvrant sur le plan défini par le plancher, de préférence plus de 80%.

4. Ensemble selon l'une des revendications précédentes, dans lequel le plancher (20 ; 34) et l'ouvrant arrière (14) sont liés l'un à l'autre de sorte que, lorsque l'ouvrant est dans sa position fermée, le plancher est nécessairement dans sa première position.

5. Ensemble selon l'une quelconque des revendications précédentes, dans lequel le plancher (20 ; 34) et l'ouvrant arrière (14) sont liés l'un à l'autre de sorte que leurs mouvements sont simultanés.

6. Ensemble selon la revendication précédente, dans lequel la liaison entre le plancher (20 ; 34) et l'ouvrant (14) comprend une liaison pivot (28) d'axe sensiblement parallèle à l'axe de l'ouvrant et une liaison glissière (30) de direction orthogonale à cet axe et contenue sensiblement dans le plan de l'ouvrant.

7. Ensemble selon l'une quelconque des revendications précédentes, comprenant en outre un actionneur des moyens de liaison du plancher au véhicule automobile apte à déplacer le plancher (20 ; 34) entre ses première et seconde positions.

8. Ensemble selon l'une quelconque des revendications précédentes, comprenant des moyens d'absorption (36) d'un choc avec un autre véhicule automobile, notamment une poutre de chocs ou un absorbeur.

9. Ensemble selon l'une quelconque des revendications précédentes, comprenant au niveau de son bord inférieur, une unique charnière centrale agencée pour permettre le pivotement de l'ouvrant entre ses deux positions.

10. Ensemble selon l'une quelconque des revendications précédentes, comprenant des moyens de verrouillage du plancher dans sa première position.

11. Véhicule automobile **caractérisé en ce qu'**il comprend un ensemble d'un ouvrant arrière (14) et d'un plancher (20 ; 34) de coffre selon l'une quelconque des revendications précédentes.

12. Véhicule (10) selon la revendication précédente, comprenant des moyens de liaison (24b) portés par des longerons (22) de véhicule, complémentaires des moyens de liaison (24a) du plancher (20 ; 34) au véhicule portés par le plancher.

13. Véhicule selon la revendication 12, dans lequel des moyens de liaison (24a, 24b) du plancher au véhicule sont intercalés verticalement entre les longerons (22) et le plancher.

14. Véhicule selon la revendication 12, dans lequel les moyens de liaison (24a, 24b) du plancher au véhicule automobile sont positionnés latéralement aux longerons (22).

15. Véhicule selon l'une quelconque des revendications 11 à 14, comprenant un hayon supérieur (12) et un second plancher (32) de coffre, supérieur au plancher (34) de l'ensemble, le second plancher étant positionné verticalement au niveau de la jonction entre l'ouvrant arrière (14) et le hayon supérieur (12).

## Claims

1. Assembly consisting of a low tailgate (14) and a floor (20; 34) for a trunk (16) of a motor vehicle (10), wherein the tailgate (14) is designed to be mounted to pivot about a horizontal axis (18) situated close to its bottom edge between a closed position in which it closes access to the floor (20; 34) at least in part and an open position in which it releases access to the floor, the floor (20; 34) is structural so as to be suitable for withstanding loading forces and it includes connection means (24a) for connection to the motor vehicle that are arranged and shaped so as to enable the floor (20; 34) to move in translation in a horizontal direction between a first position in which it is housed in the trunk (16) and a second position in which it projects at least in part out from the trunk, wherein the floor (20; 34) and the tailgate (14) are connected together with a slideway connection (30), the assembly being **characterized in that** the connection further comprises a pivot connection (28) such that when the tailgate is in its open position, the floor is necessarily in its second position.

2. Assembly according to claim 1, wherein the pivot connection (28) has an axis that is substantially parallel to the axis of the tailgate, and the slideway connection (30) extends in a direction orthogonal to said axis and that is contained substantially in the plane of the tailgate.

3. Assembly according to claim 1 or claim 2, wherein, when the tailgate is in the open position, the floor intersects at least 50% of the orthogonal projection of the tailgate onto the plane defined by the floor, and preferably more than 80%.

4. Assembly according to any preceding claim, wherein the floor (20; 34) and the tailgate (14) are connected together in such a manner that when the tailgate is in its closed position, the floor is necessarily in its first position.

5. Assembly according to any preceding claim, wherein the floor (20; 34) and the low tailgate (14) are connected together in such a manner that their movements are simultaneous.

6. Assembly according to the preceding claim, wherein the connection between the floor (20; 34) and the tailgate (14) includes a pivot connection (28) of axis substantially parallel to the axis of the tailgate and a slideway connection (30) of direction orthogonal to said axis and contained substantially in the plane of the tailgate.

7. Assembly according to any preceding claim, further including an actuator of the connection means for connecting the floor to motor vehicle and suitable for moving the floor (20; 34) between its first and second positions.

8. Assembly according to any preceding claim, including absorber means (36) for absorbing an impact with another motor vehicle, in particular an impact beam or absorber.

9. Assembly according to any preceding claim, including, at its bottom edge, a single central hinge arranged to enable the tailgate to pivot between its two positions.

10. Assembly according to any preceding claim, including locking means for locking the floor in its first position.

11. Motor vehicle, **characterized in that** it includes an assembly of a low tailgate (14) and a trunk floor (20; 34) according to any preceding claim.

12. Vehicle (10) according to the preceding claim, including connection means (24b) carried by side rails (22) of the vehicle, which means are complementary to the connection means (24a) connecting the floor (20; 34) to the vehicle and carried by the floor.

13. Vehicle according to claim 12, wherein the connection means (24a, 24b) for connecting the floor to the vehicle are interposed vertically between the side rails (22) and the floor.

14. Vehicle according to claim 12, wherein the connection means (24a, 24b) for connecting the floor to the motor vehicle are positioned beside the side rails (22).

15. Vehicle according to any one of claims 11 to 14, including a high tailgate (12) and a second trunk floor (32) higher than the floor (34) of the assembly, the second floor being positioned vertically level with the junction between the low tailgate (14) and the high tailgate (12).

## Patentansprüche

1. Anordnung mit einer Hecktür (14) und einem Boden (20; 34) eines Kofferraums (16) eines Kraftfahrzeugs (10), bei der die Hecktür (14) dazu bestimmt ist, um eine horizontale Achse (18), die sich in der Nähe ihres unteren Rands befindet, zwischen einer geschlossenen Position, in der sie den Zugang zu dem Boden (20; 34) zumindest teilweise verschließt, und einer offenen Position, in der sie den Zugang zu dem Boden freigibt, schwenkbar montiert zu werden, wobei der Boden in seiner Struktur derart ist, dass er Ladekräften standhält, und Mittel (24a) zum Verbinden mit dem Kraftfahrzeug aufweist, die eingerichtet und ausgebildet sind, um eine Beweglichkeit des Bodens (20; 34) entlang einer Verschiebung in horizontaler Richtung zwischen einer ersten Position, in der er in dem Kofferraum (16) untergebracht ist, und einer zweiten Position, in der er mindestens teilweise aus dem Kofferraum vorsteht, zu erlauben, wobei der Boden (20; 34) und die Hecktür (14) miteinander mit einer Gleitverbindung (30) verbunden sind, **dadurch gekennzeichnet, dass** die Verbindung ferner eine Schwenkverbindung (28) derart aufweist, dass der Boden, wenn die Tür in ihrer offenen Position ist, notwendigerweise in seiner zweiten Position ist.

2. Anordnung nach Anspruch 1, bei der die Schwenkverbindung (28) eine im Wesentlichen zu der Achse der Tür parallele Achse hat, und bei der die Gleitverbindung (30) in orthogonaler Richtung zu dieser Achse liegt und im Wesentlichen in der Ebene der Tür enthalten ist.

3. Anordnung nach Anspruch 1 oder 2, bei der, wenn die Tür in offener Position ist, der Boden mindestens 50 % der orthogonalen Projektion der Tür auf die Ebene, die von dem Boden definiert wird, vorzugsweise mehr als 80 %, schneidet.

4. Anordnung nach einem der vorhergehenden Ansprüche, bei der der Boden (20; 34) und die Hecktür (14) miteinander derart verbunden sind, dass der Boden, wenn die Tür in ihrer geschlossenen Position ist, notwendigerweise in seiner ersten Position ist.

5. Anordnung nach einem der vorhergehenden Ansprüche, bei der der Boden (20; 34) und die Hecktür (14) miteinander derart verbunden sind, dass ihre Bewegungen gleichzeitig sind.

6. Anordnung nach dem vorhergehenden Anspruch, bei der die Verbindung zwischen dem Boden (20; 34) und der Tür (14) eine Schwenkverbindung (28) mit einer Achse im Wesentlichen parallel zu der Achse der Tür und eine Gleitverbindung (30) mit orthogonaler Richtung zu dieser Achse und im Wesentlichen in der Ebene der Tür enthalten aufweist.

7. Anordnung nach einem der vorhergehenden Ansprüche, die ferner einen Stellantrieb der Verbindungsmittel des Bodens mit dem Kraftfahrzeug aufweist, der den Boden (20; 34) zwischen seiner ersten und seiner zweiten Position verlagern kann.

8. Anordnung nach einem der vorhergehenden Ansprüche, die Mittel (36) zum Absorbieren eines Stoßes mit einem anderen Kraftfahrzeug aufweist, insbesondere einen Stoßbalken oder einen Absorber.

9. Anordnung nach einem der vorhergehenden Ansprüche, die auf dem Niveau ihres unteren Rands ein einziges zentrales Scharnier aufweist, das eingerichtet ist, um das Schwenken der Tür zwischen ihren zwei Positionen zu erlauben.

10. Anordnung nach einem der vorhergehenden Ansprüche, die Mittel zum Verriegeln des Bodens in seiner ersten Position aufweist.

11. Kraftfahrzeug, **dadurch gekennzeichnet, dass** es eine Anordnung mit einer Hecktür (14) und einem Boden (20; 34) eines Kofferraums nach einem der vorhergehenden Ansprüche aufweist.

12. Fahrzeug (10) nach dem vorhergehenden Anspruch, das Verbindungsmittel (24b) aufweist, die von Längsträgern (22) des Fahrzeugs gehalten sind, die komplementär zu den Mittel (24a) zum Verbinden des Bodens (20; 34) mit dem Fahrzeug, die von dem Boden gehalten sind, sind.

13. Fahrzeug nach Anspruch 12, bei dem die Verbindungsmittel (24a, 24b) des Bodens mit dem Fahrzeug vertikal zwischen den Längsträgern (22) und dem Boden eingefügt sind.

14. Fahrzeug nach Anspruch 12, bei dem die Verbindungsmittel (24a, 24b) des Bodens mit dem Kraftfahrzeug seitlich an den Längsträgern (22) positioniert sind.

15. Fahrzeug nach einem der Ansprüche 11 bis 14, das eine obere Heckklappe (12) und einen zweiten Kofferraumboden (32) oberhalb des Bodens (34) der Anordnung aufweist, wobei der zweite Boden vertikal auf dem Niveau der Verbindung zwischen der Hecktür (14) und der oberen Heckklappe (12) positioniert ist.
